# EUROPÄISCHE PATENTSCHRIFT

(11) **EP 3 404 372 B1**
(45) Veröffentlichungstag und Bekanntmachung des Hinweises auf die Patenterteilung: **23.02.2022**
(21) Anmeldenummer: 18170721.7
(22) Anmeldetag: 04.05.2018
(51) Int. Cl.: G01F 1/66

(54) **ULTRASCHALLDURCHFLUSSMESSGERÄT**
ULTRASOUND FLOWMETER
DÉBITMÈTRE ULTRASONIQUE

(30) Priorität: 12.05.2017 DE 102017110308
(43) Veröffentlichungstag der Anmeldung: 21.11.2018
(73) Patentinhaber: Krohne AG, 4019 Basel (CH)
(72) Erfinder: Huijzer, Arie, 3363 BS Sliedrecht (NL); van Klooster, Jeroen Martin, 4005 GN Tiel (NL)
(74) Vertreter: Gesthuysen Patentanwälte

(56) Entgegenhaltungen:
- EP-A1- 0 392 294
- WO-A1-91/14925
- WO-A1-2014/195118
- WO-A1-2015/032401
- DE-A1- 19 549 162
- DE-A1-102011 079 250
- US-A1- 2004 123 673
- Wikipedia: "Kegelstumpf", , 26 February 2017 (2017-02-26), XP055784513, Retrieved from the Internet: URL:https://de.wikipedia.org/w/index.php?t itle=Kegelstumpf&oldid=163019337 [retrieved on 2021-03-11]

## Beschreibung

Die Erfindung geht aus von einem Ultraschalldurchflussmessgerät mit wenigstens einem Messrohr, wobei das Messrohr wenigstens eine Ausnehmung aufweist, mit wenigstens einem ersten Ultraschallwandler und einem zweiten Ultraschallwandler, wobei der erste Ultraschallwandler als Ultraschallsender und/oder als Ultraschallempfänger ausgestaltet ist und wobei der zweite Ultraschallwandler als Ultraschallsender und/oder als Ultraschallempfänger ausgestaltet ist und mit wenigstens einer Reflexionsfläche, wobei der erste und der zweite Ultraschallwandler derart an dem Messrohr angeordnet sind, dass der Messpfad zwischen dem ersten und dem zweiten Ultraschallwandler wenigstens eine Reflexion an der Reflexionsfläche umfasst und wobei die Reflexionsfläche in der Ausnehmung angeordnet ist.

Die Messung des Durchflusses eines durch ein Messrohr strömenden Mediums mit einem Ultraschalldurchflussmessgerät ist aus dem Stand der Technik bekannt. Ultraschalldurchflussmessgeräte weisen in der Regel ein Messrohr und wenigstens zwei als Ultraschallsender und/oder Ultraschallempfänger ausgestaltete Ultraschallwandler auf, die in Strömungsrichtung (axial bezogen auf die Messrohrachse) voneinander beabstandet an dem Messrohr angeordnet sind. Zur Messung des Durchflusses wird ein Ultraschallsignal entlang des Messpfades zwischen den Ultraschallwandlern sowohl in Strömungsrichtung als auch entgegengesetzt zur Strömung ausgesendet. Auf Grund des Mitführeffektes ergibt sich eine unterschiedliche Laufzeit von Signalen, die sich entlang eines Messpfades mit bzw. entgegen der Strömung bewegen. Aus dem Laufzeitunterschied wird die Strömungsgeschwindigkeit und unter Berücksichtigung des Messrohrquerschnittes der Volumendurchfluss bestimmt.

Bei der Bestimmung der Strömungsgeschwindigkeit ist ebenfalls die Ausgestaltung des Strömungsprofils des strömenden Mediums zu berücksichtigen. Grundsätzlich zu unterscheiden sind laminare und turbulente Strömungsprofile. Die Ausbildung einer turbulenten bzw. laminaren Strömung ist insbesondere abhängig von der Reynoldszahl.

Um einen möglichst niedrigen Fehler bei der Bestimmung der Strömungsgeschwindigkeit zu gewährleisten, ist es bekannt, das Strömungsprofil sowohl im Bereich der Messrohrachse bei r = 0 R₁ als auch in den Randbereichen bei einem Radius r > 0,5 R₁ zu vermessen, wobei R₁ der innere Messrohrradius ist.

Aus dem Stand der Technik der EP 0 639 776 B1 ist ein Ultraschalldurchflussmessgerät bekannt, bei dem das Ultraschallsignal akustische Pfade durchläuft, die unterschiedliche Grade einer Empfindlichkeit in Bezug auf eine Verwirbelung des Mediums aufweisen. Dabei werden die von dem Ultraschallsender ausgesendeten Signale nach wenigstens zwei Reflexionen gegen die Innenwand des Messrohrs von dem Ultraschallempfänger empfangen. Dabei durchlaufen die Ultraschallsignale einen großen Teil des Messrohrquerschnitts und liefern demzufolge ein zuverlässiges Bild der Strömung.

Die Druckschrift DE 102012013916 A1 offenbart ein Ultraschalldurchflussmessgerät mit zwei an einem Messrohr angeordneten Ultraschallwandlern, wobei die Ultraschallwandler derart angeordnet sind, und wobei der Messpfad zwischen den Ultraschallwandlern mehrere Reflexionsflächen aufweist, wobei der Messpfad zwischen den Ultraschallwandlern wenigstens drei gerade Teilabschnitte aufweist. Die minimalen Abstände der drei Teilabschnitte zur Messrohrachse betragen zwischen 0,4 und 0,8 R₁, wobei R₁ der Messrohrradius ist. Dargestellt ist ebenfalls eine Ausgestaltung, bei der das Ultraschallsignal über fünf Reflexionsflächen den Ultraschallempfänger erreicht.

Das Dokument WO 91//14925 A1 offenbart ein Ultraschalldurchflussmessgerät, wobei zur Reflexion des Messsignal konkave Ausnehmungen in das Messrohr eingebracht sind.

Aus der Druckschrift DE 10 2011 079 250 A1 ist ein Ultraschalldurchflussmessgerät bekannt, wobei zur Reflexion des Messsignals Reflektorelemente in der Messrohrwand angeordnet sind.

Zudem ist aus dem Dokument WO 2015/032401 A1 ein Ultraschalldurchflussmessgerät bekannt, wobei die Ultraschallwandler und die Reflektorelemente in einem Messrohreinsatz angeordnet sind und wobei die Reflektorelemente ein anderes Material als die Messrohrwand aufweisen.

Ausgehend von dem dargelegten Stand der Technik ist es Aufgabe der vorliegenden Erfindung ein Ultraschalldurchflussmessgerät anzugeben, mit dem das Strömungsprofil besonders einfach insbesondere im Randbereich vermessen werden kann.

Erfindungsgemäß wird die Aufgabe durch ein Ultraschalldurchflussmessgerät gemäß Anspruch 1, nämlich dadurch gelöst, dass die Reflexionsfläche in der Ausnehmung angeordnet ist. Dabei ist die Reflexionsfläche in Bezug auf die innere Messrohrwand rückversetzt angeordnet. Grundsätzlich wird im Rahmen der vorliegenden Erfindung unter einer Ausnehmung sowohl eine lokale Reduzierung der Materialdicke verstanden als auch eine Materialaussparung, also ein Loch im Material.

Es wurde erkannt, dass durch die Zurückversetzung der Reflexionsfläche der Messpfad zwischen den Ultraschallwandlern auf Grund des veränderten Abstrahlwinkels in den Randbereich des Strömungsprofils verschoben werden kann. In vorteilhafter Weise kann so der Randbereich des Strömungsprofils besonders einfach vermessen werden.

Gemäß einer vorteilhaften Ausgestaltung weist das Ultraschalldurchflussmessgerät wenigstens eine erste und wenigstens eine zweite Reflexionsfläche und wenigstens eine erste und eine zweite Ausnehmung auf, wobei die erste Reflexionsfläche in der ersten Ausnehmung und die zweite Reflexionsfläche in der zweiten Ausnehmung angeordnet ist und wobei der erste und der zweite Ultraschallwandler derart an dem Messrohr angeordnet sind, dass der Messpfad zwischen den Ultraschallwandlern wenigstens eine Reflexion an der ersten Reflexionsfläche und wenigstens eine Reflexion an der zweiten Reflexionsfläche umfasst.

Diese Ausgestaltung weist den Vorteil auf, dass das Strömungsprofil im Randbereich bei einem Radius r > 0,5 R₁ mit nur zwei Ultraschallwandlern besonders genau vermessen werden kann. Der Messpfad zwischen den Ultraschallwandlern bildet in axialer Draufsicht ein gleichseitiges Dreieck. Unter Anwendung der geometrischen Beziehungen eines gleichseitigen Dreiecks lässt sich die Tiefe der Ausnehmung mit Hilfe folgender Formel bestimmen: R₂ = 2·x₁·R₁, wobei R₂ der Abstand des Reflexionspunktes zur Messrohrachse ist, wobei x₁ zwischen 0 und 1, insbesondere zwischen 0,5 und 1, liegt und wobei R₁ der innere Messrohrradius ist.

Gemäß einer weiteren Ausgestaltung ist die Reflexionsfläche flach oder konkav oder kreisbogenförmig ausgestaltet. Besonders vorteilhaft ist die Reflexionsfläche als Kreisbogen eines Kreises mit einem Krümmungsradius R₂ ausgestaltet.

Erfindungsgemäß sind die Seitenwände der Ausnehmung schräg ausgestaltet und schließen einen stumpfen Winkel mit der Reflexionsfläche ein. Diese Ausgestaltung weist den Vorteil auf, dass das Ultraschallsignal unter einem größeren Winkel in die Ausnehmung einfallen und die Ausnehmung verlassen kann und darüber hinaus das strömende Medium durch die abgeschrägten Seiten weniger gestört wird.

Die wenigstens eine Ausnehmung ist eine sich axial erstreckende Ausnehmung , die beispielsweise mittels Zerspanen insbesondere mit einem Räumwerkzeug in das Messrohr eingebracht ist.

Eine alternative erfindungsgemäße Ausgestaltung zeichnet sich dadurch aus, dass in der wenigstens einen Ausnehmung ein Reflexionselement mit einer Reflexionsfläche angeordnet ist. Dadurch dass das Reflexionselement als separates Bauteil in die Ausnehmung eingebracht ist, kann es besonders flexibel, insbesondere strömungsangepasst ausgestaltet sein. Die Ausnehmung kann insbesondere als Loch ausgestaltet sein, in dem das Reflexionselement dichtend angeordnet ist. Diese Ausgestaltung weist den Vorteil auf, dass die durch die Ausnehmung verursachte Störung der Strömung minimiert werden kann.

Weist der in die Ausnehmung einfallende Strahl einen Winkel in Bezug auf die Senkrechte zur Reflexionsfläche auf, der größer als der kritische Winkel gemäß dem Snellius Brechungsgesetz ist, so werden neben der Reflexion des Ultraschallsignals ebenfalls Oberflächenwellen angeregt, die sowohl über das Medium als auch über das Messrohr selbst zum Ultraschallempfänger geleitet werden. Diese Wellen beeinflussen störend das zu messende Signal und sind daher unerwünscht.

Insofern kann gemäß einer weiteren vorteilhaften Ausgestaltung das Reflexionselement eine spezielle Geometrie zur Unterdrückung bzw. Minimierung dieses Störsignals aufweisen, wobei das Störsignal auf Grund der geometrischen Ausgestaltung des Reflexionselements von dem Ultraschallempfänger weggeleitet wird.

Erfindungsgemäß ist das Reflexionselement in der alternativen erfindungsgemäßen Ausführung derart ausgestaltet, dass die innere, dem Medium zugewandte Oberfläche die Form eines sich zum Medium hin öffnenden Kegelstumpfes aufweist.

Vorzugsweise weist der Rand des Kegelstumpffußes die Form eines Schnittes des Kegelstumpffußes mit einem Teil eines Zylinders auf. Besonders bevorzugt weist der Zylinder eine kreisförmige oder ovale Grundfläche auf. Gemäß einer weiteren Ausgestaltung weist der Rand des Kegelstumpffußes die Form eines Schnittes des Kegelstumpffußes mit einer Zylinderhälfte oder mit einem Teil eines Zylinders auf, dessen Mantelfläche einen Kreisbogen umfasst, der kleiner als ein Halbkreis ist.

Dabei ist die Reflexionsfläche vorzugsweise derart ausgestaltet, dass ein möglichst großer Teil des Ultraschallsignals reflektiert wird. Beispielsweise ist die Reflexionsfläche kreisförmig mit einem Durchmesser D ausgestaltet, wobei D im Wesentlichen dem Querschnitt des Ultraschallsignals entspricht. Werden weiterhin Oberflächenwellen angeregt, die u.a. Störsignale in das Medium abstrahlen, so werden diese Störsignale auf Grund der schrägen Seitenflächen des Kegelstumpfes nicht in Richtung des Empfängers ausgesendet. Zudem kann die Störung des Durchflusses bzw. der Einschluss des Mediums auf Grund der schrägen Seitenflächen des Kegelstumpfes minimiert werden.

Eine weitere Ausgestaltung zeichnet sich dadurch aus, dass das Reflexionselement zumindest teilweise aus Kunststoff oder aus Metall, insbesondere aus Bronze, Messing, Stahl, Aluminium oder Titan besteht.

Die Verwendung dieser Materialien gewährleisten eine Minimierung des zuvor beschriebenen Rayleigheffektes.

Gemäß einer weiteren Ausgestaltung ist wenigstens eine weitere Ausnehmung vorhanden, wobei der erste und/oder der zweite Ultraschallwandler in der wenigstens einen weiteren Ausnehmung angeordnet ist bzw. sind. Gemäß dieser Ausgestaltung sind die Ultraschallwandler derart in dem Messrohr angeordnet, dass sie die Strömung nicht beeinflussen. Vorzugsweise sind auch die Ultraschallwandler rückversetzt angeordnet, wodurch der Messpfad zwischen den Ultraschallwandlern im Randbereich des Strömungsprofils bei einem Radius r > 0,5 R₁ liegt.

Besonders bevorzugt sind die Ultraschallwandler zumindest teilweise in der unteren Hälfte des Messrohrs angeordnet. Diese Ausgestaltung weist den Vorteil auf, dass sofern das Medium Luft- oder Gasblasen aufweist, sich diese nicht im Bereich der Ultraschallwandler, insbesondere nicht in den Ausnehmungen, in denen die Ultraschallwandler angeordnet sind, ansammeln und so einen Messfehler verursachen.

Gemäß einer weiteren bevorzugten Ausgestaltung sind wenigstens ein dritter und ein vierter Ultraschallwandler vorhanden, die jeweils als Ultraschallsender und/oder als Ultraschallempfänger ausgestaltet sind, wobei der dritte und der vierte Ultraschallwandler in Strömungsrichtung versetzt derart an dem Messrohr angeordnet sind, dass der Messpfad zwischen dem dritten und dem vierten Ultraschallwandler die Messrohrachse bei r = 0 R₁ schneidet.

Im Einzelnen gibt es nun eine Vielzahl von Möglichkeiten das erfindungsgemäße Ultraschalldurchflussmessgerät auszugestalten und weiterzubilden. Dazu wird verwiesen sowohl auf die dem unabhängigen Patentanspruch nachgeordneten Patentansprüche als auch auf die nachfolgende Beschreibung von bevorzugten Ausführungsbeispielen in Verbindung mit der Zeichnung. In der Zeichnung zeigen
- Fig. 1: eine schematische Schnittdarstellung eines Messrohrs eines Durchflussmessgeräts mit dem von dem Ultraschallsignal durchflaufenen Messpfad,
- Fig. 2: eine zweite Darstellung des Messrohrs eines Durchflussmessgeräts,
- Fig. 3a - 3c: mögliche Ausgestaltungen der Ausnehmung,
- Fig. 4: eine Schnittdarstellung eines Durchflussmessgeräts,
- Fig. 5: ein Ausführungsbeispiel eines Durchflussmessgeräts,
- Fig. 6: eine Schnittdarstellung eines Ausführungsbeispiel eines Durchflussmessgeräts,
- Fig. 7: das Reflexionselement in der Ausnehmung gemäß dem Ausführungsbeispiel und
- Fig. 8a - 8d: verschiedene Ansichten des Reflexionselementes gemäß dem Ausführungsbeispiel.

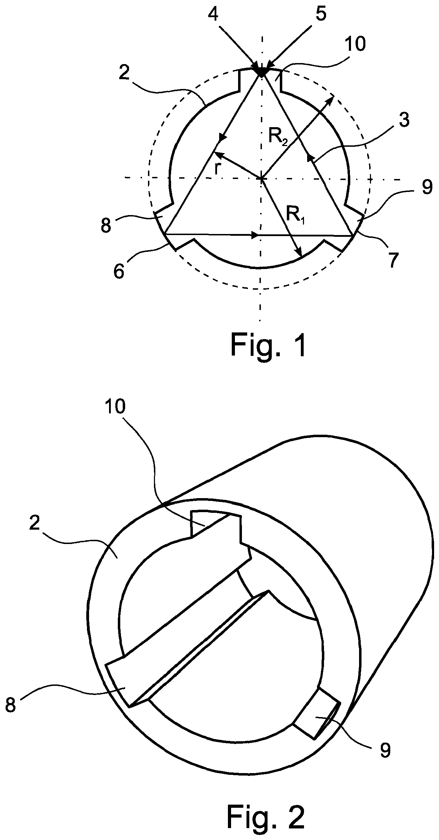

Fig. 1 zeigt eine schematische Schnittdarstellung eines Messrohrs 2 eines Ultraschalldurchflussmessgeräts 1 mit dem von dem Ultraschallsignal durchflaufenen Messpfad 3. Ein erster Ultraschallwandler 4 und ein zweiter Ultraschallwandler 5 sind derart in Strömungsrichtung versetzt zueinander angeordnet, dass das von dem als Ultraschallsender ausgestalteten Ultraschallwandler 4, 5 ausgesendete Signal nach einer Reflexion an einer ersten Reflexionsfläche 6 und nach einer Reflexion an einer zweiten Reflexionsfläche 7 den als Ultraschallempfänger ausgestalteten Ultraschallwandler 4, 5 erreicht. Der sich dadurch ergebende Messpfad 3 hat die Form eines gleichseitigen Dreiecks in axialer Draufsicht.

Die Reflexionsflächen 6, 7 sind in jeweils einer Ausnehmung 8, 9 angeordnet und auch die Ultraschallwandler sind in einer Ausnehmung 10 des Messrohrs 2 angeordnet. Durch die Rückversetzung sowohl der Reflexionsflächen 6, 7 als auch der Ultraschallwandler 4, 5 kann das Strömungsprofil innerhalb des Messrohrs 3 in vorteilhafter Weise im Randbereich bei einem Messbereich r > 0,5 R₁, wobei R₁ der Messrohrradius ist, vermessen werden. Der Fehler bei der Bestimmung der Geschwindigkeit des Mediums auf Grund einer turbulenten oder laminaren Ausgestaltung des Strömungsprofils ist durch die Vermessung im Randbereich besonders klein. Insofern kann mit dem in Fig. 1 dargestellten Ultraschalldurchflussmessgerät das Strömungsprofil im Randbereich besonders genau mit lediglich zwei Ultraschallwandlern 4, 5 vermessen werden.

Mit Hilfe der geometrischen Zusammenhänge eines gleichseitigen Dreiecks lässt sich die Tiefe der Ausnehmung und der Abstand R₂ des Reflexionspunktes zur Messrohrachse bei bekanntem Messrohrradius R₁ folgendermaßen leicht berechnen: R₂ = 2·x₁·R₁. Ist beispielsweise der innere Messrohrradius R₁ = 10 mm und wird der Bereich bei r = 0,7 R₁ bzw. bei r ≥ 0,7 R₁ vermessen, so beträgt der Abstand zum Reflexionspunkt R₂ = 14 mm.

Im dargestellten Ultraschalldurchflussmessgerät sind die Reflexionsflächen 6, 7 als Kreisbogen eines Kreises mit dem Radius R₂ ausgestaltet.

Fig. 2 zeigt eine zweite Darstellung des Messrohrs 2 eines Durchflussmessgeräts 1, wobei das Messrohr 2 Ausnehmungen 8, 9 und 10 aufweist. Die Ausnehmungen 8, 9 und 10 sind axiale Ausnehmungen, die durch Zerspanen in das Messrohr 2 eingebracht sind.

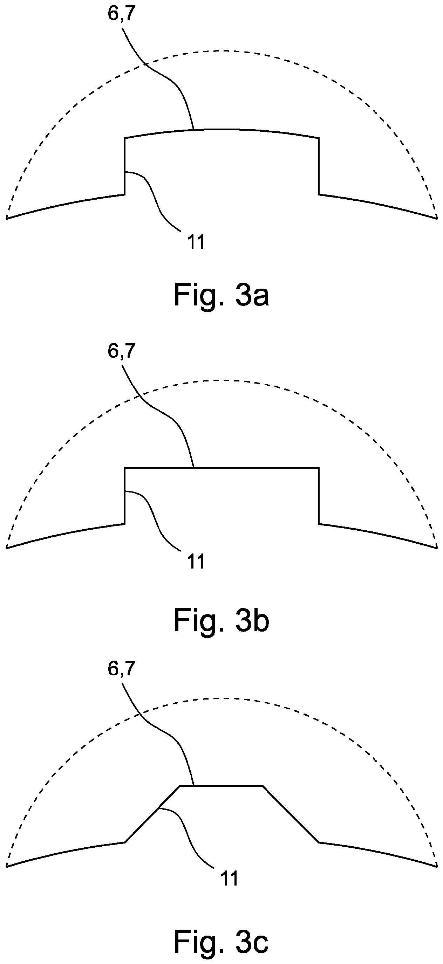

Die Fig. 3a bis c zeigen mögliche Ausgestaltungen der Ausnehmungen 8, 9 und 10. Gemäß der in Fig. 3a gezeigten Ausgestaltung ist die Reflexionsfläche 6, 7 als Kreisbogen eines Kreises mit dem Radius R₂ ausgestaltet und die Seitenwände sind im Wesentlichen senkrecht zu dem Kreisbogen ausgestaltet. Gemäß der in Fig. 3b gezeigten Ausgestaltung ist die Reflexionsfläche 6, 7 flach ausgestaltet und die Seitenwände 11 sind im Wesentlichen senkrecht zur Reflexionsfläche 6, 7 ausgestaltet. Gemäß der in Fig. 3c dargestellten Ausgestaltung ist die Reflexionsfläche 6, 7 flach ausgestaltet und die Seitenwände 11 schließen einen stumpfen Winkel mit der Reflexionsfläche 6, 7 ein.

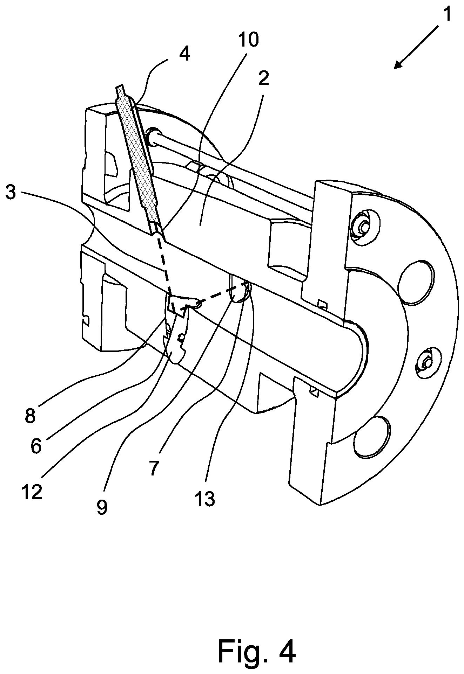

Fig. 4 zeigt eine Schnittdarstellung eines Durchflussmessgeräts 1, mit einem Messrohr 2, mit zwei Ultraschallwandlern 4, 5, die jeweils als Ultraschallsender und Ultraschallempfänger ausgestaltet sind, wobei in der Schnittdarstellung lediglich ein Ultraschallwandler 4 gezeigt ist und wobei das Messrohr 2 vier Ausnehmungen 8, 9 und 10 aufweist, von denen drei Ausnehmungen 8, 9 und 10 dargestellt sind. In einer Ausnehmung 10 ist der Ultraschallwandler 4 angeordnet. In den beiden übrigen dargestellten Ausnehmungen 8 und 9 sind jeweils Reflexionselemente 12 und 13 mit Reflexionsflächen 6 und 7 angeordnet.

Im dargestellten Durchflussmessgerät sind die Ausnehmungen 8, 9 und 10 als Löcher ausgestaltet, in die dichtend der Ultraschallwandler 4, 5 bzw. die Reflexionselemente 12, 13 eingebracht sind. Die Reflexionsflächen 6, 7 sind flach ausgestaltet. Der Messpfad 3 des Ultraschallsignals entspricht insgesamt in der axialen Draufsicht einem gleichseitigen Dreieck.

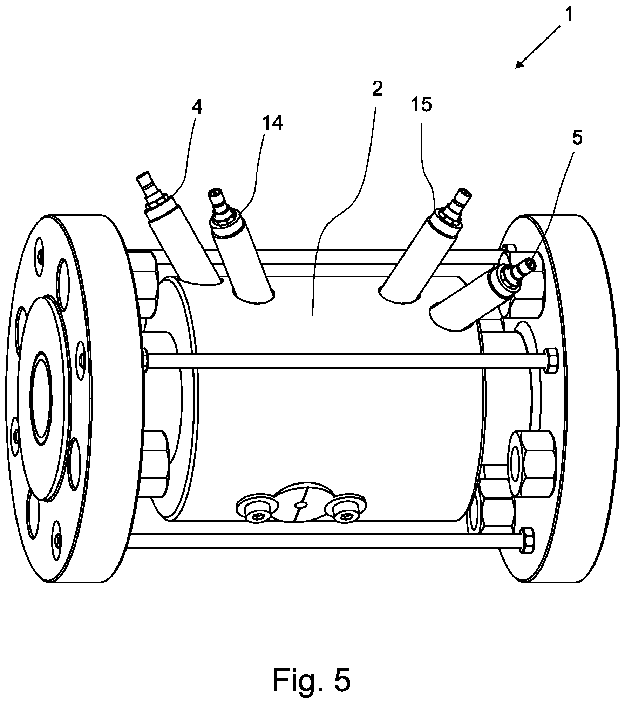

Fig. 5 zeigt ein Ausführungsbeispiel eines Durchflussmessgeräts 1, wobei neben den beiden Ultraschallwandlern 4, 5 zur Vermessung des Strömungsprofils im Randbereich zwei weitere Ultraschallwandler 14, 15 vorhanden sind, die derart am Messrohr 2 angeordnet sind, dass sie mittels eines v-förmigen Messpfades das Strömungsprofil im Bereich der Messrohrachse vermessen. Gemäß diesem Ausführungsbeispiel kann das Strömungsprofil besonders genau sowohl im Bereich der Messrohrachse als auch im Randbereich besonders genau und mit nur vier Ultraschallwandlern 4, 5, 14, 15 vermessen werden. Der Fehler bei der Bestimmung der Geschwindigkeit des Mediums und der Bestimmung des Volumendurchflusses ist damit besonders klein.

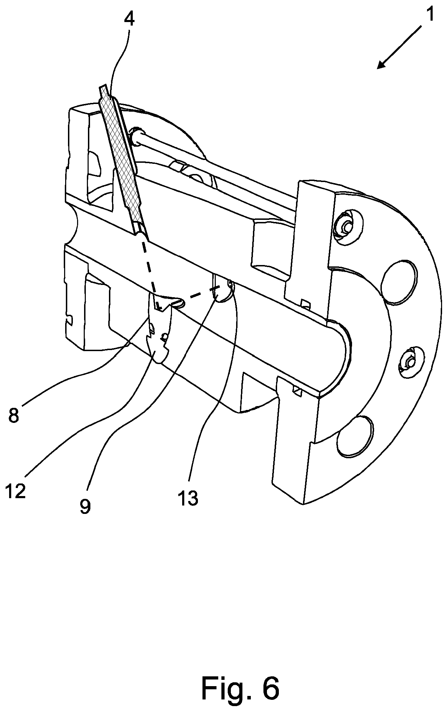

In Fig. 6 ist ein weiteres Ausführungsbeispiel eines Durchflussmessgeräts 1 mit zwei Ultraschallwandlern 4, 5 und zwei Reflexionselementen 12, 13, die in Ausnehmungen 8, 9 angeordnet sind, in Schnittansicht dargestellt, wobei wie zuvor nur ein Ultraschallwandler 4 dargestellt ist. Die Reflexionselemente 12, 13 sind in ihrer Ausgestaltung derart angepasst, dass zum einen ein möglichst großer Teil des Ultraschallsignals reflektiert wird und zum anderen eventuell angeregte Oberflächenwellen von dem Messpfad 3 und insofern von dem Ultraschallempfänger 4, 5 weggeleitet werden, damit sie nicht als Störsignal die Messung beeinflussen.

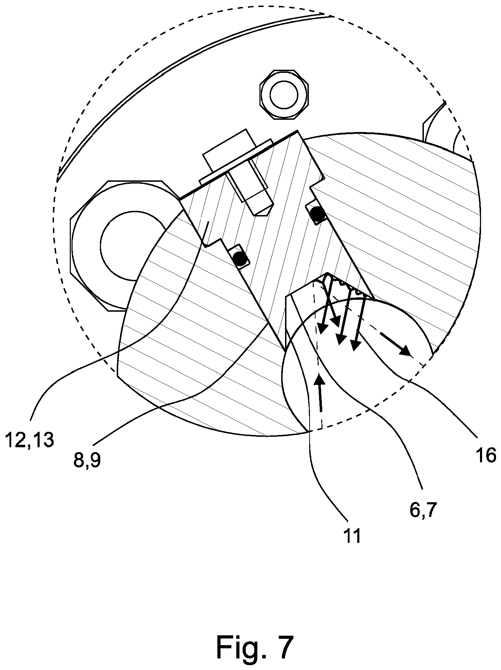

Fig. 7 zeigt eine vergrößerte Darstellung eines in Fig. 6 angeordneten Reflexionselementes 12, 13 in einer Ausnehmung 8, 9. Das Reflexionselement 12, 13 weist eine flache Reflexionsfläche 6, 7 und schräge Seitenwände 11 auf. Der Durchmesser der Reflexionsfläche 6, 7 ist derart dimensioniert, dass ein großer Teil des Ultraschallsignals reflektiert wird. Weist das einfallende Ultraschallsignal einen Winkel auf, der den kritischen Winkel gemäß dem Snellius Brechungsgesetz überschreitet, kommt es zur Ausbildung von Oberflächenwellen. Das Reflexionelement 12, 13 strahlt dann ein weiteres akustisches Signal 16 in das Medium ab. Dabei ist das Reflexionselement 12, 13 derart ausgestaltet, dass die Abstrahlung des Störsignals 16 auf Grund der schrägen Seitenflächen nicht in Ausbreitungsrichtung des interessierenden Ultraschallsignals erfolgt.

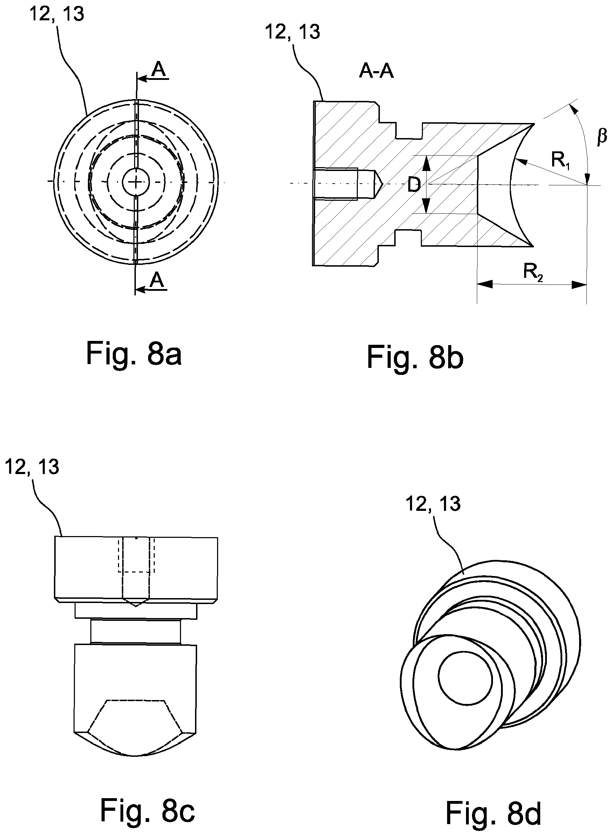

Die Fig. 8a bis 8d zeigen verschiedene Ansichten des in den Fig. 6 und 7 dargestellten Reflexionselementes 12, 13. Die Reflexionsfläche 6, 7 ist kreisförmig mit einem Durchmesser D ausgestaltet, wobei D im Wesentlichen dem Durchmesser des reflektierten Ultraschallsignals entspricht. Die Seitenwände 11 schließen einen spitzen Winkel β mit der Senkrechten auf die Reflexionsfläche 6, 7 ein. Insgesamt weist die dem Medium zugewandte Oberfläche die Form eines sich zum Medium hin öffnenden Kegelstumpfes auf, wobei der Rand des Kegelstumpffußes die Form eines Schnittes des Kegelstumpffußes mit einem Teil eines kreisförmigen Zylinders aufweist und wobei die Grundfläche des Zylinders einen Radius R₁ aufweist.

### Bezugszeichen

- 1: Durchflussmessgerät
- 2: Messrohr
- 3: Messpfad
- 4: Ultraschallwandler
- 5: Ultraschallwandler
- 6: Reflexionsfläche
- 7: Reflexionsfläche
- 8: Ausnehmung
- 9: Ausnehmung
- 10: Ausnehmung
- 11: Seitenwand
- 12: Reflexionselement
- 13: Reflexionselement
- 14: Ultraschallwandler
- 15: Ultraschallwandler
- 16: Störsignal

## Patentansprüche

1. Ultraschalldurchflussmessgerät (1) mit wenigstens einem Messrohr (2), wobei das Messrohr (2) wenigstens eine Ausnehmung (8, 9, 10) aufweist, mit wenigstens einem ersten Ultraschallwandler (4, 5) und einem zweiten Ultraschallwandler (4, 5), wobei der erste Ultraschallwandler (4, 5) als Ultraschallsender und/oder als Ultraschallempfänger ausgestaltet ist und wobei der zweite Ultraschallwandler (4, 5) als Ultraschallsender und/oder als Ultraschallempfänger ausgestaltet ist und mit wenigstens einer Reflexionsfläche (6, 7), wobei der erste und der zweite Ultraschallwandler (4, 5) derart an dem Messrohr (2) angeordnet sind, dass der Messpfad (3) zwischen dem ersten und dem zweiten Ultraschallwandler (4, 5) wenigstens eine Reflexion an der wenigstens einen Reflexionsfläche (6, 7) umfasst, wobei die wenigstens eine Reflexionsfläche (6, 7) in der wenigstens einen Ausnehmung (8, 9, 10) angeordnet ist, **dadurch gekennzeichnet,**
**dass** die wenigstens eine Reflexionsfläche in Bezug auf die innere Messrohrwand rückversetzt angeordnet ist,
**dass** die Seitenwände (11) der wenigstens einen Ausnehmung (8, 9, 10) schräg ausgestaltet sind und einen stumpfen Winkel mit der wenigstens einen Reflexionsfläche einschließen, wobei die wenigstens eine Ausnehmung eine sich axial erstreckende Ausnehmung ist, oder
**dass** in der wenigstens einen Ausnehmung (8, 9, 10) ein Reflexionselement (12, 13) mit einer Reflexionsfläche (6, 7) angeordnet ist,
wobei das Reflexionselement (12, 13) derart ausgestaltet ist, dass die dem Medium zugewandte Oberfläche die Form eines sich zum Medium hin öffnenden Kegelstumpfes aufweist.

2. Ultraschalldurchflussmessgerät (1) nach Anspruch 1, **dadurch gekennzeichnet, dass** wenigstens eine erste und wenigstens eine zweite Reflexionsfläche (6, 7) und wenigstens eine erste und eine zweite Ausnehmung (8, 9, 10) vorhanden sind, wobei die erste Reflexionsfläche (6, 7) in der ersten Ausnehmung (8, 9, 10) und die zweite Reflexionsfläche (6, 7) in der zweiten Ausnehmung (8, 9, 10) angeordnet ist, wobei der erste und der zweite Ultraschallwandler (4, 5) derart an dem Messrohr (2) angeordnet sind, dass der Messpfad (3) zwischen den Ultraschallwandlern (4, 5) wenigstens eine Reflexion an der ersten Reflexionsfläche (6, 7) und wenigstens eine Reflexion an der zweiten Reflexionsfläche (6, 7) umfasst.

3. Ultraschalldurchflussmessgerät (1) nach einem der Ansprüche 1 oder 2, **dadurch gekennzeichnet, dass** die wenigstens eine Reflexionsfläche (6, 7) flach oder konkav oder kreisbogenförmig ausgestaltet ist.

4. Ultraschalldurchflussmessgerät (1) nach einem der Ansprüche 1 bis 3, **dadurch gekennzeichnet, dass** das Reflexionselement (12, 13) derart ausgestaltet ist, dass der Rand des Kegelstumpffußes die Form eines Schnittes des Kegelstumpffußes mit einem Teil eines Zylinders aufweist.

5. Ultraschalldurchflussmessgerät (1) nach einem der Ansprüche 1 bis 4, **dadurch gekennzeichnet, dass** das Reflexionselement (12, 13) zumindest teilweise aus Kunststoff oder aus Metall, insbesondere aus Bronze, Messing, Stahl, Aluminium oder Titan besteht.

6. Ultraschalldurchflussmessgerät (1) nach einem der Ansprüche 1 bis 5, **dadurch gekennzeichnet, dass** die Ultraschallwandler (4, 5) zumindest teilweise in der unteren Hälfte des Messrohrs (2) angeordnet sind.

7. Ultraschalldurchflussmessgerät (1) nach einem der Ansprüche 1 bis 6, **dadurch gekennzeichnet, dass** wenigstens eine weitere Ausnehmung (8, 9, 10) vorhanden ist und dass der erste und/oder der zweite Ultraschallwandler (4, 5) in der wenigstens einen weiteren Ausnehmung (8, 9, 10) angeordnet ist bzw. sind.

8. Ultraschalldurchflussmessgerät (1) nach einem der Ansprüche 1 bis 7, **dadurch gekennzeichnet, dass** wenigstens ein dritter und ein vierter Ultraschallwandler (14, 15) vorhanden sind, die jeweils als Ultraschallsender und/oder als Ultraschallempfänger ausgestaltet sind, wobei der dritte und der vierte Ultraschallwandler (14, 15) in Strömungsrichtung versetzt derart an dem Messrohr (2) angeordnet sind, dass der Messpfad zwischen dem dritten und dem vierten Ultraschallwandler (14, 15) die Messrohrachse schneidet.

## Claims

1. Ultrasonic flowmeter (1) having at least one measuring tube (2), wherein the measuring tube (2) has at least one recess (8, 9, 10) with at least a first ultrasonic transducer (4, 5) and a second ultrasonic transducer (4, 5), wherein the first ultrasonic transducer (4, 5) is designed as an ultrasonic transmitter and/or as an ultrasonic receiver and wherein the second ultrasonic transducer (4, 5) is designed as an ultrasonic transmitter and/or as an ultrasonic receiver and with at least one reflection surface (6, 7), wherein the first and second ultrasonic transducers (4, 5) are arranged on the measuring tube (2) such that the measuring path (3) between the first and the second ultrasonic transducers (4, 5) comprises at least one reflection at the reflecting surface (6, 7),
wherein the at least one reflection surface (6, 7) is arranged in the at least recess (8, 9, 10)
**characterized in**
**that** the at least one reflection surface is arranged set back in respect to the inner measuring tube wall,
**that** the side walls (11) of the at least one recess (8, 9, 10) are configured obliquely and include an obtuse angle with the at least one reflection surface, wherein the at least one recess is an axially elongated recess, or
**that** a reflection element (12, 13) with the reflection surface (6, 7) is arranged in the at least one recess (8, 9, 10),
wherein the reflection element (12, 13) is designed such that the surface facing the medium has a truncated cone open toward the medium.

2. Ultrasonic flowmeter (1) according to claim 1, **characterized in that** at least a first and at least a second reflection surface (6, 7) and at least a first and a second recess (8, 9, 10) are provided, wherein the first reflection surface ( 6, 7) is arranged in the first recess (8, 9, 10) and the second reflection surface (6, 7) is arranged in the second recess (8, 9, 10), wherein the first and the second ultrasonic transducer (4, 5) are arranged on the measuring tube (2) such that the measuring path (3) between the ultrasonic transducers (4, 5) comprises at least one reflection at the first reflection surface (6, 7) and at least one reflection at the second reflection surface (6, 7) ,

3. Ultrasonic flowmeter (1) according to one of claims 1 or 2, **characterized in that** the reflection surface (6, 7) is configured flat or concave or in the form of a circular arc.

4. Ultrasonic flowmeter (1) according to any one of claims 1 to 3, **characterized in that** the reflection element (12, 13) is designed such that the edge of the truncated cone has the shape of a section of the truncated cone foot with a part of a cylinder.

5. Ultrasonic flowmeter (1) according to any one of claims 1 to 4, **characterized in that** the reflection element (12, 13) is at least partially made of synthetic material or metal, in particular bronze, brass, steel, aluminum or titanium.

6. Ultrasonic flowmeter (1) according to any one of claims 1 to 5, **characterized in that** the ultrasonic transducers (4, 5) are at least partially arranged in the lower half of the measuring tube (2).

7. Ultrasonic flowmeter (1) according to any one of claims 1 to 6, **characterized in that** at least one further recess (8, 9, 10) is provided and that the first and/or the second ultrasonic transducer (4, 5) is or are arranged in the at least one further recess (8, 9, 10).

8. Ultrasonic flowmeter (1) according to one of claims 1 to 7, **characterized in that** at least a third and a fourth ultrasonic transducer (14, 15) are provided, which are each designed as an ultrasonic transmitter and/or as an ultrasonic receiver, wherein the third and the fourth ultrasonic transducers (14, 15) are arranged offset in the flow direction on the measuring tube (2), that the measuring path between the third and the fourth ultrasonic transducer (14, 15) intersects the measuring tube axis.

## Revendications

1. Débitmètre à ultrasons (1), comprenant au moins un tube de mesure (2), le tube de mesure (2) présentant au moins un évidement (8, 9, 10), comprenant au moins un premier transducteur à ultrasons (4, 5) et un deuxième transducteur à ultrasons (4, 5), le premier transducteur à ultrasons (4, 5) étant configuré sous la forme d'un émetteur d'ultrasons et/ou d'un récepteur d'ultrasons, et le deuxième transducteur à ultrasons (4, 5) étant configuré sous la forme d'un émetteur d'ultrasons et/ou d'un récepteur d'ultrasons, et doté d'au moins une surface réfléchissante (6, 7), le premier et le deuxième transducteur à ultrasons (4, 5) étant disposés sur le tube de mesure (2) de telle sorte que la voie de mesure (3) entre le premier et le deuxième transducteur à ultrasons (4, 5) comprend au moins une réflexion sur ladite au moins une surface réfléchissante (6, 7),
ladite au moins une surface réfléchissante (6, 7) étant disposée dans ledit au moins un évidement (8, 9, 10),
**caractérisé**
**en ce que** ladite au moins une surface réfléchissante est disposée en retrait par rapport à la paroi intérieure du tube de mesure,
**en ce que** les parois latérales (11) dudit au moins un évidement (8, 9, 10) sont configurées de manière oblique et forment un angle obtus avec ladite au moins une surface réfléchissante, ledit au moins un évidement étant un évidement s'étendant axialement, ou
**en ce qu'**un élément réfléchissant (12, 13) doté d'une surface réfléchissante (6, 7) est disposé dans ledit au moins un évidement (8, 9, 10),
l'élément réfléchissant (12, 13) étant configuré de telle sorte que la surface tournée vers le fluide présente la forme d'un cône tronqué s'ouvrant vers le fluide.

2. Débitmètre à ultrasons (1) selon la revendication 1, **caractérisé en ce qu'**au moins une première et au moins une deuxième surface réfléchissante (6, 7) et au moins un premier et un deuxième évidement (8, 9, 10) sont présents, la première surface réfléchissante (6, 7) étant disposée dans le premier évidement (8, 9, 10) et la deuxième surface réfléchissante (6, 7) étant disposée dans le deuxième évidement (8, 9, 10), le premier et le deuxième transducteur à ultrasons (4, 5) étant disposés sur le tube de mesure (2) de telle sorte que la voie de mesure (3) entre les transducteurs à ultrasons (4, 5) comprend au moins une réflexion sur la première surface réfléchissante (6, 7) et au moins une réflexion sur la deuxième surface réfléchissante (6, 7) .

3. Débitmètre à ultrasons (1) selon l'une quelconque des revendications 1 ou 2, **caractérisé en ce que** ladite au moins une surface réfléchissante (6, 7) est configurée de manière plane ou concave ou en arc de cercle.

4. Débitmètre à ultrasons (1) selon l'une quelconque des revendications 1 à 3, **caractérisé en ce que** l'élément réfléchissant (12, 13) est configuré de telle sorte que le bord du pied de cône tronqué présente la forme d'une section du pied de cône tronqué avec une partie d'un cylindre.

5. Débitmètre à ultrasons (1) selon l'une quelconque des revendications 1 à 4, **caractérisé en ce que** l'élément réfléchissant (12, 13) est composé au moins partiellement de matière plastique ou de métal, en particulier de bronze, de laiton, d'acier, d'aluminium ou de titane.

6. Débitmètre à ultrasons (1) selon l'une quelconque des revendications 1 à 5, **caractérisé en ce que** les transducteurs à ultrasons (4, 5) sont disposés au moins en partie dans la moitié inférieure du tube de mesure (2) .

7. Débitmètre à ultrasons (1) selon l'une quelconque des revendications 1 à 6, **caractérisé en ce qu'**au moins un évidement supplémentaire (8, 9, 10) est présent, et **en ce que** le premier et/ou le deuxième transducteur à ultrasons (4, 5) est/sont disposé(s) dans ledit au moins un évidement supplémentaire (8, 9, 10).

8. Débitmètre à ultrasons (1) selon l'une quelconque des revendications 1 à 7, **caractérisé en ce qu'**au moins un troisième et un quatrième transducteur à ultrasons (14, 15) sont présents qui sont configurés respectivement sous la forme d'un émetteur d'ultrasons et/ou d'un récepteur d'ultrasons, le troisième et le quatrième transducteur à ultrasons (14, 15) étant disposés sur le tube de mesure (2) de manière décalée dans la direction d'écoulement de telle sorte que la voie de mesure entre le troisième et le quatrième transducteur à ultrasons (14, 15) croise l'axe de tube de mesure.
